# DEMANDE DE BREVET EUROPEEN

(11) **EP 2 161 225 A1**
(43) Date de publication de la demande: **10.03.2010**
(21) Numéro de dépôt: 09169117.0
(22) Date de dépôt: 01.09.2009
(51) Int. Cl.: B65G 47/40

(54) **Coupelle pour le transport d'un fruit ou d'un légume et installation de pesée comprenant une chaîne de transport avec de telles coupelles**

(30) Priorité: 03.09.2008 FR 0855891
(71) Demandeur: Fachaux, Jean, 18110 Saint Martin D'Auxigny (FR)
(72) Inventeur: Fachaux, Jean, 18110 Saint Martin D'Auxigny (FR)
(74) Mandataire: Maillet, Alain

(57) **Abrégé**

L'invention concerne un dispositif à coupelle (100) pour le transport d'un fruit ou d'un légume et destiné à être fixé sur une chaîne (102) et comprenant :
- une base (104) destinée à être fixée à ladite chaîne (102) par au moins un moyen de fixation,
- un arceau (106) monté mobile en rotation sur la base (104) autour d'un axe de rotation (110) horizontal et parallèle à la direction de déplacement de la chaîne (102), l'arceau (106) comprenant une traverse de glissement (122) parallèle audit axe de rotation (110) et une butée (108)
- un corps (114) présentant une rainure verticale (116) destinée à recevoir ladite traverse de glissement (122),
- une coupelle (118) fixée de manière amovible sur ledit corps (114), et
- un levier de blocage (120) monté mobile en rotation sur ladite base (104) et destiné à coopérer avec ladite butée (108).

## Description

La présente invention concerne un dispositif à coupelle pour le transport individuel de fruits et de légumes, ainsi qu'une installation de pesée comportant au moins un de ces dispositifs à coupelle.

Une installation de pesée automatisée pour fruits et légumes de l'état de la technique comprend une chaîne sans fin sur laquelle sont fixés à intervalle régulier des dispositifs à coupelle. Chaque dispositif à coupelle comprend entre autres une coupelle destinée à recevoir le fruit ou le légume. Le dispositif à coupelle comprend un mécanisme de basculement qui permet le basculement de la coupelle dans le but d'évacuer le fruit ou le légume. Une telle installation comprend également une balance qui permet de peser le fruit ou le légume afin de réaliser un tri des fruits ou légumes en fonction de leur poids. L'installation de pesée comprend également un dispositif d'actionnement qui permet d'actionner le mécanisme de basculement, et des moyens de commande destinés à actionner le dispositif d'actionnement en fonction du poids du fruit/légume pesé, de manière à l'évacuer vers une zone de réception.

Les dispositifs à coupelle de l'état de la technique sont compliqués à assembler.

Un objet de la présente invention est de proposer un dispositif à coupelle qui ne présente pas les inconvénients de l'art antérieur et qui en particulier est facile à mettre en oeuvre et permet une grande flexibilité quant au type de fruits ou de légumes pouvant être transportés.

A cet effet, est proposé un dispositif à coupelle pour le transport d'un fruit ou d'un légume et destiné à être fixé sur une chaîne et comprenant :
- une base destinée à être fixée à ladite chaîne par au moins un moyen de fixation,
- un arceau monté mobile en rotation sur la base autour d'un axe de rotation horizontal et parallèle à la direction de déplacement de la chaîne, l'arceau comprenant une traverse de glissement parallèle audit axe de rotation et une butée,
- un corps présentant une rainure verticale destinée à recevoir ladite traverse de glissement,
- une coupelle fixée de manière amovible sur ledit corps, et
- un levier de blocage monté mobile en rotation sur ladite base et destiné à coopérer avec ladite butée.

Avantageusement, le centre de gravité de l'ensemble constitué du corps, de la coupelle et du fruit/légume, d'une part, et le centre de gravité de l'ensemble constitué du corps et de la coupelle, d'autre part, sont à l'intérieur de l'arceau.

Avantageusement, la coupelle obture la partie haute de ladite rainure.

Avantageusement, la traverse de glissement est déportée à l'extérieur de ladite base.

Avantageusement, le levier de blocage vient en appui contre la butée.

Avantageusement, l'axe de rotation du levier de blocage est perpendiculaire au plan dans lequel se déplace la chaîne.

Avantageusement, l'axe de rotation du levier de blocage est réalisé par le ou l'un des moyens de fixation.

Selon un mode de réalisation particulier, l'ajustement entre la rainure et la traverse de glissement est un ajustement glissant juste.

Selon un autre mode de réalisation particulier, l'ajustement entre la rainure et la traverse de glissement est un ajustement libre, et le dispositif à coupelle comprend une biellette montée mobile en rotation sur l'arceau et dont l'extrémité libre se loge dans une rainure de réception du corps.

Avantageusement, l'axe de rotation de la biellette par rapport à l'arceau est horizontal et perpendiculaire à l'axe de rotation de l'arceau.

Avantageusement, l'extrémité libre comprend un cylindre parallèle à l'axe de rotation de la biellette et l'ajustement entre la rainure de réception et le cylindre est un ajustement glissant juste.

L'invention propose également une installation de pesée comprenant une chaîne, au moins un dispositif à coupelle selon l'une des variantes précédentes fixé sur la chaîne, une balance, au moins un dispositif d'actionnement du levier de blocage, et des moyens de commande destinés à recevoir des informations depuis la balance et à actionner le ou chaque dispositif d'actionnement.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente un dispositif à coupelle selon un premier mode de réalisation de l'invention,
la Fig. 2 représente un dispositif à coupelle selon un deuxième mode de réalisation de l'invention,
la Fig. 3 est une vue éclatée d'un dispositif à coupelle selon un troisième mode de réalisation de l'invention, et
les Figs. 4a, 4b et 4c montrent les différentes positions prises par le dispositif à coupelle de l'invention.

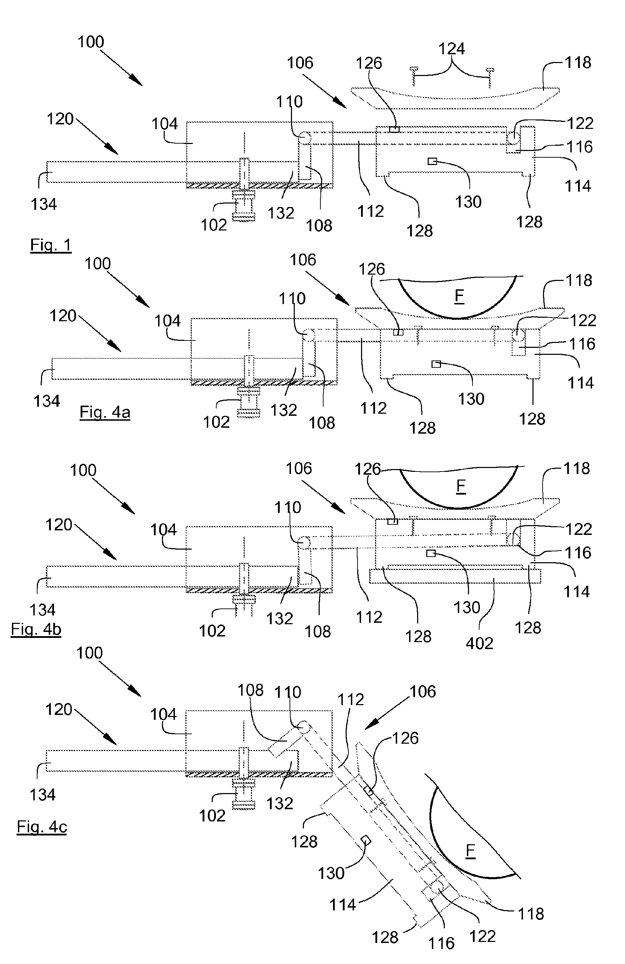

Dans la description qui suit, les termes relatifs à une position sont pris en référence à un dispositif à coupelle dont la coupelle est disposée horizontalement, c'est-à-dire comme il est représenté sur la Fig. 1, c'est-à-dire dans une position de transport d'un fruit/légume.

La Fig. 1 montre un dispositif à coupelle 100 selon un premier mode de réalisation de l'invention, en coupe selon un plan parallèle au plan de la feuille et qui coupe le dispositif sensiblement par son milieu. Le dispositif à coupelle 100 est sensiblement symétrique par rapport audit plan de coupe.

Le dispositif à coupelle 100 est fixé sur une chaîne 102 dont un des maillons est représenté. La chaîne 102 est dans le mode de réalisation présenté ici, une chaîne sans fin qui forme une boucle se déplaçant dans un plan horizontal, mais l'invention s'applique également lorsque la chaîne 102 forme une boucle se déplaçant dans un plan vertical.

Le dispositif à coupelle 100 comprend:
- une base 104 destinée à être fixée à la chaîne 102 par au moins un moyen de fixation,
- un arceau 106 monté mobile en rotation sur la base 104 autour d'un axe de rotation 110 horizontal et parallèle à la direction de déplacement de la chaîne 102, l'arceau comprend une butée 108 et une traverse de glissement 122 parallèle à l'axe de rotation 110,
- un corps 114 présentant une rainure verticale 116 destinée à recevoir ladite traverse de glissement 122,
- une coupelle 118 fixée de manière amovible sur ledit corps 114, et
- un levier de blocage 120 monté mobile en rotation sur ladite base 104 et destiné à coopérer avec ledit arceau 106.

La base 104 prend dans le mode de réalisation de l'invention présenté sur la Fig. 1, la forme d'un U dont le fond est parallèle au plan dans lequel se déplace la chaîne 102, c'est-à-dire horizontal. Le U est fixé à la chaîne 102 et les parois latérales s'étendent verticalement, vers le haut à partir du fond.

L'arceau 106 prend la forme d'un cadre présentant deux bras 112 et la traverse de glissement 122. Les deux bras 112 sont espacés l'un de l'autre dans la direction de l'axe de rotation 110 et s'étendent de manière sensiblement horizontale vers l'extérieur de la base 104. La traverse de glissement 122 relie les deux extrémités des bras 112 qui sont distantes de la base 104. Les deux autres extrémités des bras 112 sont reliées par une traverse de renfort qui forme ici l'axe de rotation 110. La traverse de renfort 110 constitue également dans ce mode de réalisation, la butée 108 destinée à coopérer avec le levier de blocage 120 afin de maintenir l'arceau 106 dans une position de transport.

Dans le mode de réalisation de l'invention présenté ici, la rainure 116 est ouverte vers le haut de manière à faciliter l'introduction de la traverse de glissement 122 et la coupelle 118 obture la partie haute de la rainure 116. Dans un autre mode de réalisation, la rainure 116 peut être limitée uniquement dans le corps 114.

L'arceau 106 peut être constitué de différents éléments assemblés mais il est de préférence constitué d'un seul élément. Dans le mode de réalisation de la Fig. 1, l'arceau 106 est réalisé à partir d'une tige pliée, dont les deux extrémités libres se rejoignent pour former la butée 108. Chaque extrémité libre est verticale et est pliée de manière à se positionner orthogonalement au plan de la feuille et à traverser l'une des parois verticales de la base 104, formant ainsi l'axe de rotation 110 par passage à travers un orifice que présente, à cet effet, chacune des parois verticales de la base 104. Après chaque traversée, la tige est pliée de manière à constituer les bras 112, puis à l'extrémité de chaque bras 112, la tige est pliée de manière à constituer la traverse de glissement 122.

L'introduction de l'arceau 106 dans les orifices des parois verticales s'effectue de manière classique comme par exemple la réalisation d'un méplat sur l'arceau 106 et la réalisation de fentes débouchant dans les orifices.

Le corps 114 est introduit entre les deux bras 112 et la traverse de glissement 122 est introduite dans la rainure 116.

La coupelle 118 est fixée au corps 114 par des moyens de fixation amovibles comme par exemple des vis 124. Ce mode de fixation permet de changer le corps 114 et/ou la coupelle 118 en fonction des fruits et légumes devant être transportés. Par exemple, il est possible de monter plusieurs tailles de coupelles 118 en fonction du type de fruit (par exemple une coupelle 76 x 80 pour les abricots, et 95 x 90 pour les pommes). De même, il est possible de monter des coupelles 118 réalisées dans des matériaux différents en fonction de la fragilité du fruit (coupelle en matériau plastique tendre et souple pour des fruits fragiles comme les pommes, en plastique rigide et plus facile à nettoyer pour les fruits plus salissants comme le kiwi).

Le centre de gravité de l'ensemble constitué du corps 114, de la coupelle 118 et du fruit/légume, d'une part, et le centre de gravité de l'ensemble constitué du corps 114 et de la coupelle 118, d'autre part, sont à l'intérieur de l'arceau 106.

Afin de garantir la position horizontale de la coupelle 118 et limiter la rotation de l'ensemble, une butée de positionnement 126 solidaire du corps 114 ou de la coupelle 118 est disposée au-dessus de l'arceau 106.

Le corps 114 comprend des patins 128, généralement entre trois et quatre, qui sont destinés à venir reposer sur une balance lors d'une pesée.

Du fait du poids de l'ensemble, l'arceau 106 est entraîné en rotation autour de l'axe de rotation horizontal 110, pour le maintenir en position horizontale de transport, l'une des extrémités 132 du levier de blocage 120 vient en appui contre la butée 108. L'autre extrémité 134 est destinée à être actionnée par un dispositif d'actionnement qui entraîne le déplacement de l'extrémité 132 et par conséquent la libération de la butée 108 et la rotation de l'arceau 106 autour de l'axe de rotation 110. A cette fin, le levier de blocage 120 est monté mobile en rotation autour d'un axe de rotation vertical sur la base 104, c'est-à-dire perpendiculaire au plan dans lequel se déplace la chaîne 102. La rotation du levier de blocage 120 libère la butée 108 et le basculement de l'arceau 106.

Pour assurer le retour du levier de blocage 120 dans sa position initiale, celui-ci est combiné à un ressort de rappel.

Pour assurer que l'ensemble constitué du corps 114 et de la coupelle 118 ne bascule pas autour de la traverse de glissement 122, une butée de retournement 130 est prévue sur le corps 114. Cette butée de retournement 130 est disposée au-dessous de l'arceau 106.

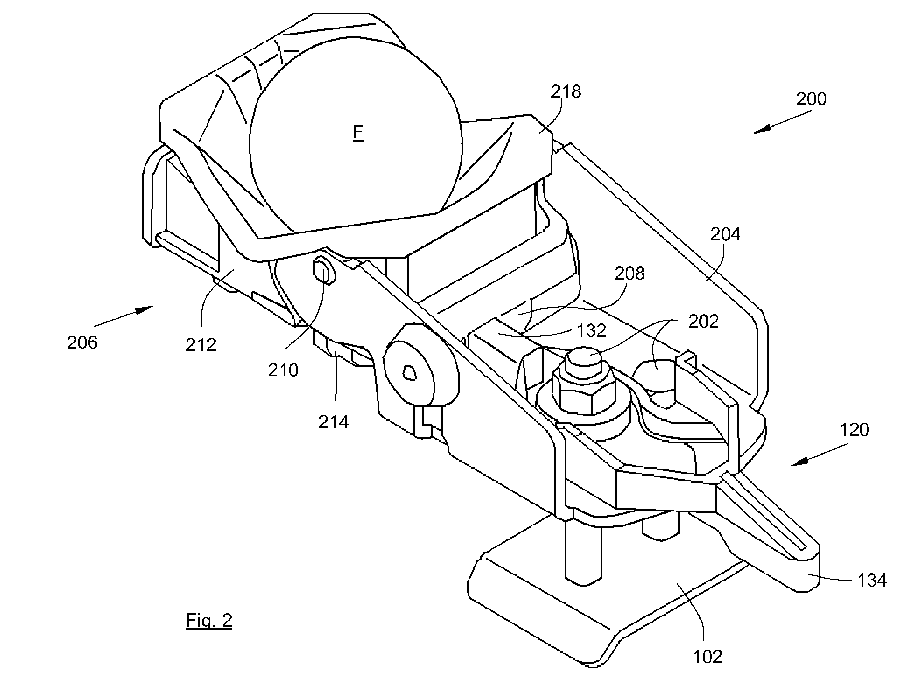

La Fig. 2 montre un dispositif à coupelle 200 selon un deuxième mode de réalisation de l'invention. Le dispositif à coupelle 200 est fixé sur une chaîne 102 par des boulons 202.

Le dispositif à coupelle 200 comprend:
- une base 204 en U qui est fixée à la chaîne 102 par des moyens de fixation qui sont ici constitués par des boulons 202,
- un arceau 206 qui est monté mobile en rotation sur la base 204 autour d'un axe de rotation 210 horizontal et parallèle à la direction de déplacement de la chaîne 102, l'arceau 206 comprend également une butée 208 et une traverse de glissement parallèle à l'axe de rotation 210,
- un corps 214 présentant une rainure verticale destinée à recevoir ladite traverse de glissement,
- une coupelle 218 fixée de manière amovible sur ledit corps 214 et destinée à recevoir un fruit/légume F, et
- un levier de blocage 120 monté mobile en rotation sur ladite base 204 et destiné à coopérer avec ledit arceau 206 par l'intermédiaire de la butée 208.

L'arceau 206 est, dans ce mode de réalisation, une pièce moulée dont l'axe de rotation 210 est réalisé par des plots entrant dans des orifices réalisés dans les parois verticales de la base 204.

Le principe de fonctionnement du dispositif à coupelle 200 de la Fig. 2 est le même que celui du dispositif à coupelle 100 de la Fig. 1, c'est-à-dire que le fait que la coupelle 218 et le corps 214 sont montés l'un sur l'autre par des moyens de fixation amovibles assure une grande flexibilité du dispositif à coupelle 200 par rapport aux fruits/légumes pouvant être manipulés.

Dans les deux modes de réalisation de l'invention, pour faciliter le montage du levier de blocage 120, sa fixation sur la base 104, 204 est assurée par un des boulons 202 assurant la fixation du dispositif à coupelle 100, 200 sur la chaîne 102. L'axe de rotation du levier de blocage 120 est réalisé par la tige filetée du boulon 202 et le levier de blocage est pris en sandwich entre le fond du U constituant la base 104, 204 et l'écrou du boulon 202.

Les Figs. 4a à 4c montrent les différentes positions prises par le dispositif à coupelle 100. Ces positions sont identiques à celles que peut prendre le dispositif à coupelle 200 selon le deuxième mode de réalisation.

La Fig. 4a montre le dispositif à coupelle 100 en position de transport, c'est-à-dire dans une position dans laquelle la coupelle 118 est horizontale et est positionnée pour recevoir le fruit/légume et à le transporter. La traverse de glissement 122 est alors en position haute, c'est-à-dire qu'elle est en butée contre la partie haute de la rainure 116, ici la coupelle 118, d'une part, et la butée de positionnement 126, d'autre part. L'extrémité 132 du levier de blocage 120 est en appui contre la butée 108 rendant impossible toute rotation dans le sens horaire autour de l'axe de rotation 110.

La Fig. 4b montre le dispositif à coupelle 100 en position de pesage, c'est-à-dire dans une position dans laquelle l'ensemble constitué du corps 114, de l'arceau 106, de la coupelle 118 et d'un fruit/légume F est positionné sur une balance 402 pouvant prendre par exemple la forme d'un capteur de poids. Le corps 114 repose sur le capteur de poids 402 par l'intermédiaire des patins 128. Le capteur de poids 402 soulève l'ensemble ainsi constitué de manière à libérer l'appui entre le levier de blocage 120 et la butée 108, le capteur de poids 402 peut ainsi déterminer le poids de l'ensemble et en déduire le poids du fruit/légume F. La traverse de glissement 122 est alors en position basse, c'est-à-dire qu'elle est en butée contre le fond de la rainure 116. La butée de retournement 130 est disposée de manière à ne pas gêner le déplacement des bras 112 lors du déplacement du corps 124 vers la position de pesage. La butée de retournement 130 est ici en deçà du fond de la rainure 116.

La Fig. 4c montre le dispositif à coupelle 100 dans une position d'escamotage, c'est-à-dire dans une position dans laquelle le fruit/légume est évacué de la coupelle 118. L'extrémité 132 du levier de blocage 120 est escamotée par rotation dudit levier de blocage 120 autour de son axe de rotation par action du dispositif d'actionnement. La butée 108 n'est alors plus en appui contre le levier de blocage 120, ce qui permet la rotation de l'ensemble constitué de l'arceau 106, du corps 114, de la coupelle 118 et du fruit/légume F autour de l'axe de rotation horizontal 110 dans le sens horaire, et permet l'évacuation du fruit/légume F vers une zone de réception. Le fait que la butée 108 est uniquement en appui contre le levier de blocage 120 permet d'éviter tout transfert d'effort à travers cette liaison au moment de la pesée et donc d'erreur de pesée. En outre, le temps d'activation d'un tel levier de blocage 120 est court en comparaison des temps d'activation des leviers de blocage existants. Un tel levier de blocage est également peu encombrant. Le fait que l'axe de rotation horizontal 110 est parallèle à la direction de déplacement de la chaîne 102 permet d'obtenir un vidage direct et plus doux du fruit/légume lors de l'évacuation.

Dans les deux premiers modes de réalisation présentés ici, la rainure 116 et la traverse de glissement 122 sont dimensionnées l'une par rapport à l'autre de manière à assurer un ajustement glissant juste. La rainure 116 s'étend ainsi verticalement sur une hauteur permettant le passage dans la position de pesage. L'ajustement glissant juste assure un bon guidage du corps 114, 214 le long de la traverse de glissement 122 tout en évitant un débattement horizontal et assure ainsi un bon positionnement sur le capteur de poids 402.

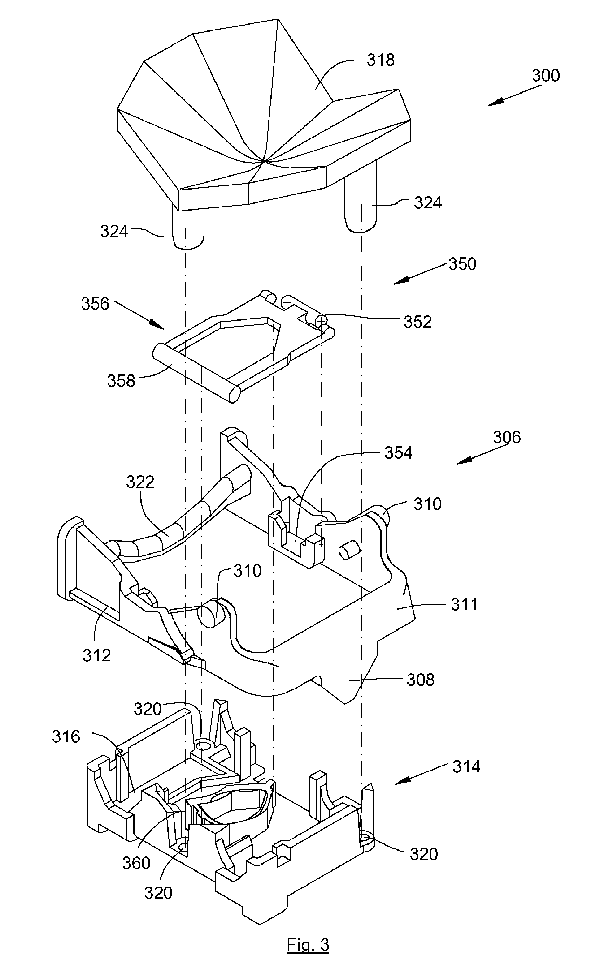

La Fig. 3 montre une vue éclatée d'un dispositif à coupelle 300 selon un troisième mode de réalisation de l'invention qui ressemble au dispositif à coupelle 200 de la Fig. 2.

Le dispositif à coupelle 300 est fixé sur une chaîne et il comprend:
- une base en U non représentée sur la Fig. 3 et qui est fixée à la chaîne,
- un arceau 306 qui est monté mobile en rotation sur la base autour d'un axe de rotation 310 horizontal et qui est ici matérialisé par des plots entrant dans des orifices de la base, l'axe de rotation 310 est parallèle à la direction de déplacement de la chaîne et l'arceau comprend une butée 308 et une traverse de glissement 322 parallèle à l'axe de rotation 310,
- un corps 314 présentant une rainure verticale 316 destinée à recevoir ladite traverse de glissement 322,
- une coupelle 318 fixée de manière amovible sur ledit corps 314 et destinée à recevoir un fruit/légume, et
- un levier de blocage non représenté sur la Fig. 3, qui est monté mobile en rotation sur ladite base et destiné à coopérer avec ledit arceau 306 par l'intermédiaire de la butée 308.

Dans ce mode de réalisation aussi, la rainure 316 est ouverte vers le haut et la coupelle 318 vient obturer la partie haute de la rainure 316.

L'arceau 306 présente également la forme d'un cadre présentant deux bras latéraux 312 dont les deux extrémités distantes de la base sont reliées par la traverse de glissement 322. Les deux autres extrémités sont reliées par une traverse de renfort 311 qui porte la butée 308.

L'arceau 306 est monté entre le corps 314 et la coupelle 318, qui est elle-même fixée au corps 314 par des moyens de fixation amovibles, par exemple des vis. Les vis viennent se visser dans des cylindres 324 de la coupelle 318 en traversant des alésages 320 du corps 314.

Lorsque la rainure 316 et la traverse de glissement 322 sont dimensionnées l'une par rapport à l'autre de manière à assurer un ajustement glissant juste, le dispositif à coupelle 300 est identique au dispositif à coupelle 200, c'est-à-dire que la liaison entre l'arceau 306 et le corps 314 présente un degré de liberté en translation verticale.

Dans le mode de réalisation présenté sur la Fig. 3, la rainure 316 présente une dimension nettement supérieure à la dimension de la traverse de glissement 322, assurant ainsi un ajustement libre entre les deux pièces. La liaison entre l'arceau 306 et le corps 314 peut alors présenter un degré de liberté en translation verticale et un degré de liberté en translation horizontale.

Pour limiter ces degrés de liberté, le dispositif à coupelle 300 comprend une biellette 350. La biellette 350 est montée mobile en rotation sur l'arceau 306. L'axe de rotation de la biellette 350 est horizontal et perpendiculaire à l'axe de rotation 310 de l'arceau 306. La biellette 350 est disposée entre le corps 314 et la coupelle 318.

La biellette 350 présente un arbre 352 parallèle à l'axe de rotation de la biellette et destiné à être monté dans une rainure de montage 354 de l'arceau 306, la coopération de l'arbre 352 et de la rainure de montage 354 permet de créer la rotation de la biellette 350 par rapport à l'arceau 306.

L'extrémité libre 356 de la biellette 350 se loge dans une rainure de réception 360 que le corps 314 présente. L'extrémité libre 356 comprend un cylindre 358 parallèle à l'arbre de rotation 352 qui vient se placer dans la rainure de réception 360 qui est ouverte vers le haut et est obturée lors de la mise en place de la coupelle 318. L'ajustement entre la rainure de réception 360 et le cylindre 358 est de préférence un ajustement glissant juste. En position de repos, c'est-à-dire dans la position de convoyage, l'extrémité libre 356 de la biellette 350 est au-dessous de l'axe de son arbre de rotation 352.

Le fonctionnement du dispositif à coupelle 300 est identique à celui des autres modes de réalisation présentés ci-dessus au moment du transport d'un fruit/légume et de son évacuation. Au cours de la pesée, le capteur de poids 402 soulève le dispositif à coupelle 300, et en particulier le corps 314 qui est muni, à cette fin, de patins. Au cours du soulèvement, l'extrémité libre 356 de la biellette 350 se soulève et passe par une position dans laquelle son extrémité libre 356 est dans le même plan horizontal que l'axe de son arbre de rotation 352. Dans cette position, les efforts de traction/compression qui s'exercent sur la biellette 350 ne présentent aucune composante verticale puisqu'elles s'équilibrent les unes les autres. La pesée s'effectue à cet instant puisque la mesure du poids n'est pas perturbée par des efforts verticaux générés dans la biellette 350.

Dans les différents modes de réalisation présentés ici, la coupelle 118, 218, 318 est déportée par rapport à la chaîne 102 du fait de l'existence des bras 112, 212, 312 qui écartent la traverse de glissement 122, 322 et donc la coupelle 118, 218, 318 à l'extérieur de la base 104, 204. Ainsi, lors de l'évacuation du fruit/légume F, le basculement de l'arceau 106, 206, 306 offre des angles de vidage importants, particulièrement intéressants dans le cas de fruits/légumes non roulants comme les poires.

Une installation de pesée comprend une chaîne 102, au moins un dispositif à coupelle 100, 200, 300 fixé sur la chaîne, une balance 402, au moins un dispositif d'actionnement du levier de blocage 120, des moyens de commande destinés à actionner le ou chaque dispositif d'actionnement en fonction du poids du fruit/légume pesé, de manière à l'évacuer vers une zone de réception appropriée.

Bien entendu, la présente invention n'est pas limitée aux exemples et modes de réalisation décrits et représentés, mais elle est susceptible de nombreuses variantes accessibles à l'homme de l'art.

Par exemple, le dispositif à coupelle a été présenté, monté sur une chaîne se déplaçant dans un plan horizontal, mais il peut être également monté sur une chaîne se déplaçant dans un vertical. Dans ce cas, seuls la base et le positionnement du levier de blocage sont différents. La base se présente sous la forme d'un U dont le fond est disposé verticalement, c'est-à-dire parallèlement au plan dans lequel se déplace la chaîne. Le levier de blocage est monté mobile en rotation sur la base. L'axe de rotation du levier de blocage est horizontal et le levier de blocage s'étend sensiblement verticalement. L'une des extrémités du levier de blocage vient en appui contre la butée que l'arceau présente.

## Revendications

1. Dispositif à coupelle (100, 200, 300) pour le transport d'un fruit ou d'un légume et destiné à être fixé sur une chaîne (102) et comprenant :
- une base (104, 204) destinée à être fixée à ladite chaîne (102) par au moins un moyen de fixation (202),
- un arceau (106, 206, 306) monté mobile en rotation sur la base (104, 204) autour d'un axe de rotation (110, 210, 310) horizontal et parallèle à la direction de déplacement de la chaîne (102), l'arceau (106, 206, 306) comprenant une traverse de glissement (122, 322) parallèle audit axe de rotation (110, 210, 310) et une butée (108, 208, 308)
- un corps (114, 214, 314) présentant une rainure verticale (116, 316) destinée à recevoir ladite traverse de glissement (122, 322),
- une coupelle (118, 208, 318) fixée de manière amovible sur ledit corps (114, 214, 314), et
- un levier de blocage (120) monté mobile en rotation sur ladite base (104, 204) et destiné à coopérer avec ladite butée (108, 208, 308).

2. Dispositif à coupelle (100, 200, 300) selon la revendication 1, **caractérisé en ce que** le centre de gravité de l'ensemble constitué du corps (114, 214, 314), de la coupelle (118, 218, 318) et du fruit/légume, d'une part, et le centre de gravité de l'ensemble constitué du corps (114, 214, 314) et de la coupelle (118, 218, 318), d'autre part, sont à l'intérieur de l'arceau (106, 206, 306).

3. Dispositif à coupelle (100, 200, 300) selon l'une des revendications 1 ou 2, **caractérisé en ce que** la coupelle (118, 218, 318) obture la partie haute de ladite rainure (116, 316).

4. Dispositif à coupelle (100, 200, 300) selon l'une des revendications 1 à 3, **caractérisé en ce que** la traverse de glissement (122, 322) est déportée à l'extérieur de ladite base (104, 204).

5. Dispositif à coupelle (100, 200, 300) selon l'une des revendications 1 à 4, **caractérisé en ce que** le levier de blocage (120) vient en appui contre la butée (108, 208, 308).

6. Dispositif à coupelle (100, 200, 300) selon l'une des revendications 1 à 5, **caractérisé en ce que** l'axe de rotation du levier de blocage (120) est perpendiculaire au plan dans lequel se déplace la chaîne (102).

7. Dispositif à coupelle (100, 200, 300) selon l'une des revendications 1 à 6, **caractérisé en ce que** l'axe de rotation du levier de blocage (120) est réalisé par le ou l'un des moyens de fixation (202).

8. Dispositif à coupelle (100, 200) selon l'une des revendications 1 à 7, **caractérisé en ce que** l'ajustement entre la rainure (116) et la traverse de glissement (122) est un ajustement glissant juste.

9. Dispositif à coupelle (300) selon l'une des revendications 1 à 7, **caractérisé en ce que** l'ajustement entre la rainure (316) et la traverse de glissement (322) est un ajustement libre, et **en ce qu'**il comprend une biellette (350) montée mobile en rotation sur l'arceau (306) et dont l'extrémité libre (356) se loge dans une rainure de réception (360) du corps (314).

10. Dispositif à coupelle (300) selon la revendication 9, **caractérisé en ce que** l'axe de rotation de la biellette (350) par rapport à l'arceau (306) est horizontal et perpendiculaire à l'axe de rotation (310) de l'arceau (306).

11. Dispositif à coupelle (300) selon l'une des revendications 9 ou 10, **caractérisé en ce que** l'extrémité libre (356) comprend un cylindre (358) parallèle à l'axe de rotation de la biellette (350) et **en ce que** l'ajustement entre la rainure de réception (360) et le cylindre (358) est un ajustement glissant juste.

12. Installation de pesée comprenant une chaîne (102), au moins un dispositif à coupelle (100, 200, 300) selon l'une des revendications 1 à 11 fixé sur la chaîne (102), une balance (402), au moins un dispositif d'actionnement du levier de blocage (120), et des moyens de commande destinés à recevoir des informations depuis la balance (402) et à actionner le ou chaque dispositif d'actionnement.
